# EUROPEAN PATENT APPLICATION

(11) **EP 2 070 685 A1**
(43) Date of publication of application: **17.06.2009**
(21) Application number: 07739823.8
(22) Date of filing: 27.03.2007
(51) Int. Cl.: B29C 65/16, B23K 26/18, B23K 26/32, B29C 65/48, C09J 153/00, B29L 9/00

(54) **INTERMEDIATE MEMBER FOR LASER BONDING AND METHOD OF BONDING USING THE SAME**

(30) Priority: 05.10.2006 JP 2006273540
(71) Applicant: Okayama Prefectural Government, Okayama-shi, Okayama 700-8570 (JP); Hayakawa Rubber Co., Ltd., Minoshima-cho Fukuyama-shi, Hiroshima 721-8540 (JP)
(72) Inventor: MITOOKA, Yutaka, Okayama-shi, Okayama 701-1296 (JP); NAGATA, Kazuya, Yokohama-shi, Kanagawa 2400001 (JP); HINO, Makoto, Okayama-shi, Okayama 701-1296 (JP); URAKAMI, Kazuto, Fukuyama-shi, Hiroshima 721-8540 (JP); FUJITA, Kazuya, Fukuyama-shi, Hiroshima 721-8540 (JP)
(74) Representative: Müller-Boré & Partner Patentanwälte
(86) International application number: PCT/JP2007/056385
(87) International publication number: WO 2008/044349

(57) **Abstract**

An intermediate member for laser bonding (3) to be sandwiched, in order to bond a first member (2) and a second member (4) using a laser welding method, between the first member (2) made of a material capable of transmitting laser beams and the second member (4) made of a material which is the same as or different from that of the first member (2) before irradiation with laser beams, the intermediate member for laser bonding (3) having tackiness. This intermediate member for laser bonding (3) can be used for bonding of various materials, and thus a high bonding strength can be attained.

## Description

### TECHNICAL FIELD

The present invention relates to an intermediate member for laser bonding to be sandwiched between a first member and a second member prior to irradiation with laser beams in order to use a laser welding method to bond the first member made of a material capable of transmitting laser beams and the second member made of a material which is the same as or different from the first member. Furthermore the present invention relates to a method of bonding and a bonded article using the intermediate member.

### BACKGROUND ART

A method of bonding members which are made of resins, or made of different materials such as a resin and a material other than the resin for example includes a method of bonding by irradiation with laser beams (so-called laser welding method). This is a method in which a transmitting member capable of transmitting laser beams is brought into contact with a nontransmitting member incapable of transmitting laser beams and then laser beams are irradiated from the side of the transmitting member to thereby heat-fuse the contact portion between the transmitting member and the nontransmitting member and bond and integrate both members. In such a method, since a combination of a laser-transmitting material and a laser-nontransmitting material is required and materials having low affinity for each other could not be satisfactorily bonded, there was a limitation on a combination of bondable materials. Even if the materials were bonded, the strength and reliability were often insufficient.

It is considered to be important to irradiate with laser beams while maintaining a fixed gap between members to be bonded when using laser bonding. When the gap is too small, it is impossible to absorb the local volumetric change of a resin melted by irradiation with laser beams and unfavorable residual stress may be generated. In contrast, when the gap is too large, the melt-bonded area may be insufficient. Therefore, in order to maintain the gap between members within a range from several micrometers to several tens of micrometers, a method of irradiating with laser beams while applying a fixed pressure is employed. However, it was difficult to maintain a fixed gap by applying a proper pressure to a member having a complicated shape.

As a method of bonding laser-transmitting materials with each other by a laser welding method, for example, there is proposed a method in which laser-transmitting members are laminated with each other in a state where a resin member containing a toner or coating material capable of absorbing laser beams is allowed to exist at a bonding interface between the laser-transmitting members, followed by irradiation with laser beams (for example, refer to Patent Documents 1 to 3). It is thought that a laser beam absorbing material existing at a bonding interface between the laser-transmitting materials absorbs energy of laser beams, thereby bonding both the laser-transmitting materials as a result of melting of the bonding interface, and thus transmitting members can be bonded with each other. However, when different kinds of materials are bonded with each other, stress is likely to be generated at the bonding interface due to a difference in a linear expansion coefficient, and thus sufficient bonding strength may not be obtained, resulting in peeling. As described above, it has been difficult to irradiate with laser beams while maintaining a proper gap.

Although the entire bonding surface can be irradiated with laser beams when bonding by a laser welding method, energy consumption increases and a decrease in production efficiency cannot be avoided. Although only a portion of the bonding surface can be welded by irradiation with laser beam in a spot or linear state, an adhesive force may become insufficient in this case.

Patent Document 1: JP 2003-181931 A
Patent Document 2: JP 2004-1071 A
Patent Document 3: JP 2005-238462 A

### DISCLOSURE OF THE INVENTION

### PROBLEM TO BE SOLVED BY THE INVENTION

The present invention has been made so as to solve the problems described above and an object thereof is to provide an intermediate member for laser bonding, which can be used for bonding various members with each other, and also can attain a high bonding strength by a simple and easy operation. Another object of the present invention is to provide a bonding method and a bonded article using the intermediate member.

### MEANS FOR SOLVING THE PROBLEM

The above problems can be solved by an intermediate member for laser bonding to be sandwiched, in order to bond a first member and a second member using a laser welding method, between the first member made of a material capable of transmitting laser beams and the second member made of a material which is the same as or different from that of the first member before irradiation with laser beams, wherein the intermediate member for laser bonding has tackiness.

The intermediate member for laser bonding is preferably made of a resin composition comprising a base polymer and a tackifier. The base polymer is preferably an elastomer, and more preferably a thermoplastic elastomer. Also, the base polymer is preferably modified with a monomer having a polar functional group. The intermediate member for laser bonding preferably contains the tackifier in the amount of 1 to 500 parts by weight based on 100 parts by weight of the base polymer.

The base polymer of the intermediate member for laser bonding is preferably an acrylic-based block copolymer. Also, the intermediate member for laser bonding preferably contains a laser beam absorbing agent. The intermediate member for laser bonding preferably has a thickness of 10 to 5,000 µm, and also preferably has a tensile elastic modulus at 23°C of 0.01 to 500 MPa. A 180 degree peel tack force to a SUS 304 plate measured based on JIS Z0237 10.4 of the intermediate member for laser bonding is preferably 0.1 N/25 mm or more.

The above problems can also be solved by a method for bonding a first member made of a material capable of transmitting laser beams and a second member made of a material which is the same as or different from that of the first member, the method comprising sandwiching an intermediate member having tackiness for laser bonding between the first member and the second member, and irradiating with laser beams from the side of the first member, thereby fusing the intermediate member for laser bonding and bonding the first member and the second member. The second member is preferably made of a material which is different from that of the first member. Also, only a portion of the intermediate member for laser bonding is preferably melted by irradiation with laser beams.

The above problems are also solved by a bonded article comprising a first member made of a material capable of transmitting laser beams, a second member made of a material which is the same as or different from that of the first member, and an intermediate member for laser bonding, which is sandwiched between the first member and the second member, and is also fused to each of the first member and the second member as a result of irradiation with laser beams, wherein the intermediate member for laser has tackiness.

### EFFECTS OF THE INVENTION

By using the intermediate member for laser bonding of the present invention, various materials can be welded with a high bonding strength by a simple and easy operation.

### BRIEF DESCRIPTION OF THE DRAWINGS

Fig. 1 is a schematic sectional view showing a bonded article obtained by a bonding method of the present invention.
Fig. 2 is schematic top and sectional views for explaining a method for laminating a first member, a bonding sheet and a second member in Examples.
Fig. 3 is a schematic perspective view for explaining a method for measuring shear strength in the Examples.

### EXPLANATION OF LETTERS OR NUMERALS

1: Bonded article
2: First member
3: Sheet for laser bonding (Intermediate member for laser bonding)
4: Second member
5: Member for shear test
A: Portion to be laminated
L: Laser beams

### BEST MODE FOR CARRYING OUT THE INVENTION

The intermediate member for laser bonding of the present invention is sandwiched, in order to bond a first member and a second member using a laser welding method, between the first member made of a material capable of transmitting laser beams and the second member made of a material which is the same as or different from that of the first member before irradiation with laser beams.

The first member used in the present invention is made of a (laser-transmitting) material capable of transmitting laser beams. As used herein, "capable of transmitting laser beams" means "having a transmittance which enable the transmission of laser beams as a heating source without slight reflection or absorption, or even when a portion of the laser beams is adsorbed or reflected, no fusion occurs and the remaining laser beams are transmitted, and thus laser beams reach the intermediate member for bonding.

The first member is not particularly limited as long as it is made of a material capable of transmitting laser beams as described above and, for example, a first member made of a resin or glass is preferably used. Examples of the resin include those capable of transmitting laser beams among known various resins, for example, polyamide resins such as nylon 6 and nylon 66; polyolefin resins such as polyethylene and polypropylene; polyoxymethylene; polyester resins such as polyethylene terephthalate and polybutylene terephthalate; acrylic resins such as methyl polymethacrylate; polycarbonate resins; polyvinyl chloride; styrene resins such as polystyrene and ABS; and epoxy resins. The glass includes for example those capable of transmitting laser beams which are widely-used known glasses such as soda-lime glass, lead glass and borosilicate glass. Also, tempered glass, laminated glass and layered glass can be used.

The second member used in the present invention may be made of the same material as that of the fist member, or may be made of a material which is different from that of the first member. Either materials capable of transmitting laser beams as described above or other materials can be used. As the material capable of transmitting laser beams, the same materials as those used for the first member can be used. As the material of the second member, for example, laser-absorbing materials capable of absorbing laser beams can be used, in addition to the materials capable of transmitting laser beams.

As used herein, "capable of absorbing laser beams" means "having a property which enables absorption of the remaining laser beams regardless of transmission and/or reflection of a portion of laser beams as a heating source, resulting in heating". Examples of a laser-absorbing material include metal, ceramics, and an inorganic filler-containing resin composition comprising a resin and an inorganic filler. It is also possible to use a laser-absorbing material obtained by adding a dye or a pigment to the above laser-transmitting material.

The metal may be used alone, or an alloy of two or more kinds of metals may be used. As ceramics, for example, known various ceramics, for example, oxide-based ceramics (including complex oxide) such as zirconia and alumina; carbide-based ceramics such as silicon carbide; nitride-based ceramics such as silicon nitride; and phosphate-based ceramics such as apatite can be used. Composite materials of the above metals and ceramics can also be used. From a practical point of view, metals are preferably used as the material of the second member and examples thereof include steel, stainless steel, aluminum (alloy), copper (alloy), titanium (alloy), and magnesium (alloy).

The intermediate member for laser bonding of the present invention is used so that it is irradiated with laser beams in a state of being sandwiched between the first member and the second member and then heat-melted by the energy of the laser beams thereby bonding the first member and the second member. It is necessary that this intermediate member has tackiness. Thereby, the intermediate member can be temporarily fixed to the bonding surface in a simple manner when the intermediate member is sandwiched between the first member and the second member, and thus workability is remarkably improved. An improvement in a bonding strength derived from a tack force can also be expected.

The material constituting the intermediate member is not particularly limited as long as it has tackiness. A resin composition comprising a base polymer and a tackifier may be used and, when the base polymer itself has tackiness, the tackifier may not be used. The tackifying effects associated with a low molecular weight component can also be obtained by widening the molecular weight distribution of the polymer. The material constituting the intermediate member may have a crosslinked structure as long as laser welding performance is not adversely affected.

There is no particular limitation on the base polymer to be used for the intermediate member for laser bonding. In order to conform to the shape of the bonding surface, a flexible base polymer is preferably used. It is possible to use various resins, for example, polyolefin including various modified polyethylenes such as ethylene-α-olefin copolymer, ethylene-vinyl acetate copolymer, ethylene-(meth)acrylate (ester) copolymer, and ethylene-maleic anhydride copolymer; acrylic resins such as (meth)acrylate copolymer; polyester resins; polyamide resins; polystyrene-based resins; polyvinyl chloride resins; and polyurethane resins.

It is an elastomer which is preferably used as the base polymer for the following reason. Namely, the elastomer is flexible and has elasticity and is therefore suited to satisfactorily conform to the shape of the bonding surface and adheres thereto. As the elastomer, a thermoplastic elastomer or a crosslinked rubber can be used and is not particularly limited. Although known various rubbers such as an isoprene-based rubber and a butadiene-based rubber can be used as the crosslinked rubber, the degree of crosslinking is preferably low since laser weldability of a highly crosslinked rubber may deteriorate. Examples of the thermoplastic elastomer include a styrene-based elastomer, an olefin-based elastomer, an acryl-based elastomer, a polyester-based elastomer, a polyurethane-based elastomer, a polyamide-based elastomer, a silicon-based elastomer, and a fluorine-based elastomer. In the present invention, a thermoplastic elastomer is preferably used in view of weldability and ease of proce-ssability. Among these elastomers, a styrene-based elastomer, an olefin-based elastomer, an acryl-based elastomer and a urethane-based elastomer are preferably used.

When a resin and a metal are bonded, or a hydrophobic resin and a polar resin are bonded, a base polymer is preferably modified with a monomer having polar functional groups. Since these polar functional groups have high affinity with the metal and the polar resin, the bonding strength of the intermediate member bonded with the metal or polar resin can be increased by using an intermediate member for laser bonding which is made of a base polymer modified with the monomer having polar functional group. Also, the base polymer having polar functional groups sometimes shows higher absorbency to laser beams than that of a base polymer having no polar functional group, depending on a wavelength of laser beams to be used, and thus the base polymer having polar functional groups can be sometimes used preferably as the material of the intermediate member. Base polymers having polar groups such as carboxyl group (including carboxylic anhydride group), epoxy group, amino group, hydroxyl group or ester group are preferable. Among these base polymers, a base polymer having a carboxyl group (including carboxylic anhydride group) is used particularly preferably.

The base polymer may be blended with plural resins or elastomers. For example, plural resins or plural elastomers may be blended, or a resin and an elastomer may be blended. A base polymer having a polar functional group and a base polymer having no polar functional group may be blended. According to the purposes, various blends can be used as the base polymer.

One of preferable intermediate members for laser bonding of the present invention is composed of a resin composition comprising a base polymer and a tackifier. An intermediate member having tackiness can be easily produced by blending with a tackifier. Since most tackifiers have high affinity with metal, an adhesion force of the portion heat-fused by laser beams can be often increased when compared with the case of containing no tackifier.

Examples of the tackifier include cumarone resins such as a cumarone-indene resin and a mixture of a cumarone resin, a naphthene-based oil, and a phenol resin; terpene-based resins such as a terpene resin, a modified terpene resin (for example, an aromatic modified terpene resin), a terpene-phenol resin, and a hydrogenated terpene resin; rosin derivatives such as a gum rosin, a tall oil rosin, a wood rosin, a pentaerythritol ester of a rosin, a glycerol ester of a rosin, a hydrogenated rosin, a hydrogenated wood rosin, a methyl ester of a hydrogenated rosin, a pentaeythritol ester of a hydrogenated rosin, an ester of triethylene glycol of a hydrogenated rosin, a dismutated rosin, a polymerized rosin, a glycerol ester of a polymerized rosin, and a cured rosin; turpentine-based tackifiers; petroleum-based hydrocarbon resins such as an aromatic hydrocarbon resin, an aliphatic hydrocarbon resin, an unsaturated hydrocarbon (olefin-based, diolefin-based) polymer, an isoprene-based resin, a hydrogenated hydrocarbon resin, a hydrocarbon-based tackifier, polybutene, a liquid polybutadiene, and a low molecular weight butyl rubber; styrene-based resins; phenol-based resins; and xylene-based resins. Among these tackifiers, terpene-based resins are preferable.

The content of the tackifier is not particularly limited, and is preferably from 1 to 500 parts by weight based on 100 parts by weight of the base polymer. When the content of the tackifier is less than the above range, a tack force may not be sufficiently improved. The content of the tackifier is more preferably 10 parts by weight or more, and still more preferably 20 parts by weight or more. In contrast, if the content of the tackifier is too large, flexibility of the intermediate member may deteriorate and cause insufficient stress relaxation and insufficient conformity to the surface shape. Further, the strength of the intermediate member itself may be deteriorated. The content of the tackifier is more preferably 300 parts by weight or less, and still more preferably 200 parts by weight or less.

As described above, when the base polymer itself has tackiness, the tackifier may not be used. Examples of the base polymer having tackiness include an acryl-based polymer, a urethane-based polymer, and a diene-based polymer.

In order to obtain a base polymer which has shape retention ability and also has tackiness and flexibility, a block copolymer composed of a hard block and a soft block is preferably used. In view of shape retention ability and heat resistance, the hard block preferably has a melting point (in the case of a crystal form) or a glass transition temperature (in the case of an amorphous form) of 50°C or higher, and more preferably 80°C or higher. In view of melt moldability, the hard block usually has a melting point or a glass transition temperature of 300°C or lower. In view of tackiness and flexibility, the soft block preferably has a glass transition temperature of 20°C or lower, more preferably 0°C or lower and still more preferably -20°C or lower. In view of tackiness, the soft block is preferably amorphous. Both soft and hard blocks are more preferably amorphous.

As the block copolymer, an acryl-based block copolymer is preferably used. An amorphous hard block and an amorphous soft block form a microphase-separation structure and the block copolymer can have both excellent mechanical performances and tackiness. Moreover, the block copolymer is a polar polymer and therefore displays an adhesive strength after irradiation with laser beams.
Since the acryl-based polymer is usually stable to light and heat, stable adhesion performances can be expected over a long period. It is preferred that the hard segment is composed of an alkyl methacrylate and the soft block is composed of an alkyl acrylate. According to the purposes, a diblock copolymer or a triblock copolymer can be used properly, or may be used in combination. Specific examples thereof include a triblock copolymer of methyl methacrylate-n-butyl acrylate-methyl methacrylate and a diblock copolymer of methyl methacrylate-n-butyl acrylate. The glass transition temperature of the hard block composed of methyl methacrylate is from about 100 to 120°C, while the glass transition temperature of the soft block composed of n-butyl methacrylate is from about -40 to -50°C. A tackifier may be added to the acryl-based block copolymer.

As the base polymer which itself has tackiness, a urethane-based polymer is also preferably used. The urethane-based polymer has a urethane bond having high polarity and is particularly excellent in tackiness to metal. A two-component curing type urethane-based polymer is used particularly preferably and a polymer having excellent tackiness can be obtained. A urethane-based polymer can be obtained by mixing and reacting an isocyanate compound and an alcohol to be used as materials. A diisocyanate compound such as tolylene diisocyanate (TDI) or diphenylmethane diisocyanate (MDI) and a diol compound are preferably mixed and reacted. The chemical structure and the molecular weight of the diol compound are adjusted according to the purposes. Using a tri- or higher functional isocyanate compound and an alcohol, a crosslinked structure may be introduced as long as the effects of the present invention are not adversely affected.

For the purpose of improving laser beam absorptivity of the intermediate member for laser bonding, it is also preferred that the intermediate member contains an absorbing agent of laser beams (hereinafter also referred to as a "laser beam absorbing agent"). The laser beam absorbing agent in the present invention means an agent which can improve laser beam absorptivity of the intermediate member as a result of the addition. As the laser beam absorbing agent, known agents, for example, inorganic pigments such as carbon black and a complex oxide; organic pigments such as a phthalocyanine-based pigment, a lake pigment, and polycyclic pigment; and various dyes according to the wavelength of various laser beams can be appropriately used. The amount of the laser beam absorbing agent largely varies depending on the kind, and is usually from about 0.01 to 20 parts by weight based on 100 parts by weight of the base polymer. Another various additives can also be mixed.

The form of the intermediate member for laser bonding is not particularly limited as long as it can be sandwiched between the first member and the second member. For example, the intermediate member for laser bonding may be in the form of a sheet or bar, or may have a complicated three-dimensional shape. Taking account of ease of production and ease of handling, the intermediate member for laser bonding may be in the form of a sheet. The sheet in the present invention is has a concept including a thin one such as a film, and a thick one such as a plate.

The thickness of the intermediate member for laser bonding is preferably from 10 to 5,000 µm. When the intermediate member for laser bonding has a proper thickness, it becomes possible to properly relax stress generated at a bonding interface between both members in case where the first member and the second member are bonded by heat-melting through energy of laser beams. When the intermediate member is too thin, stress between both members may not be sufficiently relaxed. From such a point of view, the thickness of the intermediate member is more preferably 20 µm or more, and still more preferably 50 µm or more. In contrast, when the intermediate member is too thick, it becomes difficult to melt-bond both the first member and the second member. However, in that case, it is possible to weld one interface by laser beams and to bond the other interface only by a tack force. It is preferred that the intermediate member is not too thick in view of cost requirements and strength of the intermediate member itself. The thickness of the intermediate member is more preferably 2,000 µm or less, and still more preferably 1,000 µm or less. The thickness of the intermediate member as used herein means a distance between the surface to be contacted with the first member and the surface to be contacted with the second member.

The tensile elastic modulus at 23°C of the intermediate member for laser bonding of the present invention is preferably from 0.01 to 500 MPa. When the intermediate member for laser bonding has such a tensile elastic modulus, it is possible to relax stress (strain) at the interface between both members to be generated due to a difference in a linear expansion coefficient when two different materials are bonded. Also, it becomes easy to conform the intermediate member to the surface shape of the bonding surface. Therefore, the resulting bonded article can maintain a high adhesive strength. When the tensile elastic modulus is too low, it may become difficult to retain the shape of the intermediate member, resulting in poor workability. The tensile elastic modulus is preferably 0.1 MPa or more. In contrast, when the tensile elastic modulus is too high, stress relaxation and conformity to the surface shape may become insufficient. The tensile elastic modulus is preferably 100 MPa or less, and more preferably 50 MPa or less.

With respect to a tack force of the intermediate member for laser bonding, a 180 degree peel tack force (adherend: SUS 304) based on JIS Z0237 10.4 is preferably 0.1 N/25 mm or more. The use of the intermediate member having such a tack force enables easy fixation of the intermediate member to the bonding surface, and an increase in an adhesion force between the first member and the second member. The 180 degree peel tack force is preferably 0.5 N/25 mm or more, more preferably 2 N/25 mm or more, and still more preferably 5 N/25 mm or more.

There is no particular limitation on a method for producing such an intermediate member for laser bonding. The intermediate member can be produced by mixing a base polymer with a tackifier using a kneading machine such as a kneader or an extruder, followed by kneading and further molding. A desired molded article can be obtained by rolling using a calender or extruding through a die. It can also be produced by dissolving components in a solvent and applying the solution on a release paper, followed by drying. When the tackifier is not used, the above operation may be performed using only the base polymer.

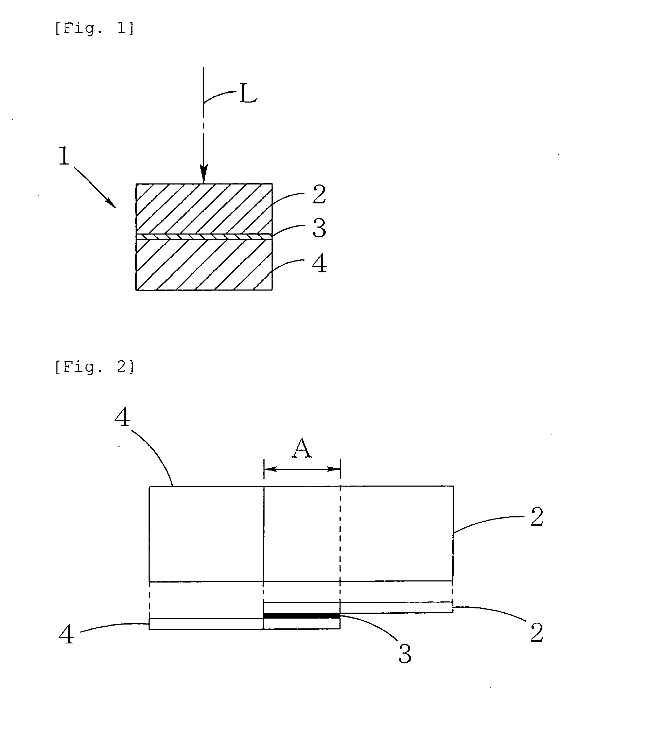

The intermediate member for laser bonding thus explained is sandwiched between a first member and a second member and the intermediate member is melted by irradiation with laser beams, and thus the first member and the second member are bonded with each other. The bonding method of the present invention will now be described with reference to the accompanying drawings. Fig. 1 is a schematic sectional view showing an example of a bonded article obtained by the bonding method of the present invention. A bonded article 1 in Fig. 1 comprises a first member 2, a sheet for laser bonding 3 and a second member 4 which are laminated in this order. In the bonding method of the present invention, as shown in Fig. 1, the sheet for laser bonding 3 is sandwiched between the first member 2 and the second member 4, followed by irradiation with laser beams L from the side of the first member.

The intermediate member for laser bonding of the present invention has tackiness and therefore can be simply fixed to the bonding surface of the first member or the second member. Moreover, the intermediate member for laser bonding also has excellent flexibility and therefore easily conforms to the shape of the bonding surface of both members. Accordingly, plural intermediate members are suited for local use to member having a wide area, and the intermediate member is also suited for use to the non-flat bonding surface. Moreover, it is easy to maintain a distance between the first member and the second member within a fixed range by a simple and easy operation. In order to obtain a tack force, it is preferred that the intermediate member is sandwiched between the first member and the second member and a pressure is applied from both sides of the first member and the second member thereby enhancing an adhesion force, followed by irradiation with laser beams. Since the pressure can be removed upon irradiation with laser beams, excellent workability is attained.

In the present invention, any known laser such as a gas laser, solid laser and semiconductor laser can be used as the source of laser beams without particular limitation. Upon use, laser beams having an optimum wavelength and output can be selected according to the kind and thickness of the first member, the second member and the intermediate member for laser bonding. Laser beams are not limited to laser beams of one wavelength, and may be laser beams in which two or more wavelengths are mixed. When the bonding range is wider than the irradiation diameter of laser beams, laser beams may be irradiated while optionally moving a laser light source or a laminated article (obtained by laminating a first member and a second member via an intermediate member) to be bonded.

Since the first member is capable of transmitting laser beams, at least a portion of laser beams irradiated from the side of the first member transmits the first member and reaches the intermediate member for laser bonding. When the intermediate member is made of a material capable of absorbing laser beams, the intermediate member is heat-melted by energy of laser beams absorbed by the intermediate member itself. At this time, when at least one of the first member and the second member is made of a resin, the resin is melted by transfer of heat of the intermediate member. After completion of irradiation with laser beams, the resin of the intermediate member and the first member and/or the second member is solidified again by air-cooling, and thus the intermediate member and the resin are welded.

In contrast, when at least one of the first member and the second member is made of a material other than the resin (metal, glass or ceramics), the intermediate member for laser bonding heat-fused by irradiation with laser beams is fused to the material other than the resin. After completion of irradiation with laser beams, the material is solidified again by air-cooling, and thus the intermediate member and the material other than the resin are fused. In such a manner, the first member and the intermediate member, and the intermediate member and the second member are fused at each bonding interface, and thus the first member and the second member are bonded.

When the intermediate member for laser bonding is made of a laser-transmitting material, at least a portion of the laser beams reaching the intermediate member pass through the intermediate member and reach the second member. Since the second member must be heated by laser beams to generate heat so as to heat-melt the laser-transmitting intermediate member, it is necessary that the second member is made of a laser-absorbing material. When the intermediate member is heat-melted by heat generated by heating the second member with laser beams and then solidified by cooling, the first member and the second member are bonded. In such a manner, a bonded article is obtained which comprises the first member, the second member, and the intermediate member which is sandwiched between these members and is fused to each of the first member and the second member.

According to the bonding method of the present invention, an intermediate member for laser bonding, comprising a base polymer and a tackifier is fused by irradiating with laser beams, thereby bonding a first member and a second member. Therefore, as described above, a bonding interface between the intermediate member and the intermediate member side of the first member and/or the second member is subjected to a heat cycle of heating by irradiating with laser beams, followed by cooling. At this time, a stress can be produced on the bonding interface due to a difference in linear expansion coefficient between the first member and the second member. When a flexible intermediate member is used, such a stress can be relaxed and thus a decrease in bonding strength and peeling can be prevented. Thereby, reliability of bonding can be improved. Since most tackifiers have high affinity with metal, an adhesion force of the portion heat-fused by laser beams increases when compared with the case of containing no tackifier. Also, since the portion, which was not heat-melted by laser beams, is adhered by a tack force, the adhesive strength can be further improved.

Heat stress or mechanical stress is generated on the bonding interface by using the resulting bonded article. However, even in such a case, heat stress or mechanical stress is relaxed by using a flexible intermediate member for laser bonding, and thus the bonding strength can be maintained even when used over a long period. Furthermore, when adhered only by a tack force, there often arises a problem such as creep during use over a long period. When only a portion of the intermediate member is bonded by local irradiation with laser beams, the fused portion serves as an anchor, thus making it possible to prevent the occurrence of creep.

Examples of the first member and the second member (first member/second member) include resin/resin, resin/metal, resin/ceramics, resin/glass, glass/resin, glass/metal, glass/ceramics, and glass/glass. When the second member and the first member are made of different materials, the actual merit of employing the intermediate member for laser bonding of the present invention is great. A combination of "resin/resin" is useful when different kinds of resins, especially resins having different polarities are bonded with each other. It is also useful when a resin containing a large amount of inorganic filler and a resin containing no inorganic filler are bonded with each other. A combination of "resin/metal" is a combination of effectively exerting the effects of the present invention and is particularly important combination because of large practical needs, and stress generated by a difference in a thermal expansion coefficient can be eliminated by using the bonding sheet of the present invention.

### EXAMPLES

The present invention will be described in further detail by way of Examples. Procedures for tests in the following Examples are as follows.

### (1) Tensile Elastic Modulus

In accordance with JIS K7161 and JIS K6251, a tensile elastic modulus defined in "4.6 Tensile Elastic Modulus" of JIS K7161 was measured and calculated. A dumbbell-shaped No. 3 specimen was used. The tensile elastic modulus was measured after conditioning under an environment at 23°C.

### (2) 180-Degree Peel Tack Force

In accordance with JIS Z0237 10.4, a 180 degree peel tack force (N/25 mm) to a stainless steel (SUS304) plate was measured. When a measuring chart of a tack force waves, an average of the convex point and that of the concave point were determined and an average thereof was taken as a 180 degree peel tack force. A 180 degree peel tack force to a polypropylene plate was measured in the same manner.

### (3) Shear Strength

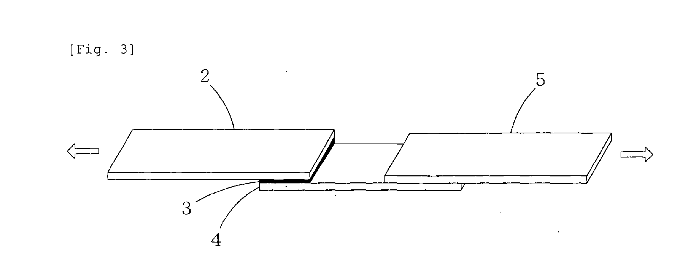

A shear test of the resulting bonded article was performed using Instron 3382 (Instron Corporation). As shown in Fig. 3, a member 5 similar to a first member 2 was bonded on the same bonding surface as that of a second member 4 using a nut and a tensile force is applied in parallel to the first member and the member 5 (direction indicated by arrows in the drawing), and thus a shear test was performed. In that case, a shear rate was set to 10 mm/sec and a maximum strength was determined. The resulting maximum strength was taken as the shear strength.

The following plates were used as members to be bonded in Examples and Comparative Examples described below. Polypropylene (PP)
A plate measuring 25 mm in width, 50 mm in length and 2 mm in thickness which is made of polypropylene ("PP-N-BN", manufactured by Shin-Kobe Electric Machinery Co., Ltd.) was used.

### Polyoxymethylene (POM)

A plate measuring 25 mm in width, 50 mm in length and 2 mm in thickness which is made of polyoxymethylene ("POLYPENCO ACETAL COPOLYMER", manufactured by Nippon Polypenco Ltd.) was used.

### Aluminum (AL)

An aluminum plate measuring 25 mm in width, 50 mm in length and 1.5 mm in thickness was used.

### High Tensile Strength Steel Plate (HT)

A high tensile strength steel plate (HT80) measuring 25 mm in width, 50 mm in length and 1.5 mm in thickness was used.

### Example 1

20 parts by weight of SEBS modified with a monomer having a carboxyl group (styrene content: 32% by weight, molecular weight: 52,000), 20 parts by weight of a terpene resin ("YS Resin TO-115", manufactured by YASUHARA CHEMICAL CO., LTD.), 0.05 parts by weight of an infrared absorbent ("IR-T", manufactured by SHOWA DENKO K.K.) and 60 parts by weight of toluene were weighed, placed in a container, allowed to stand while sealing for 18 hours and then stirred by a screw until a uniform mixture is obtained. The resulting mixture was applied on a release paper using a coater and then dried to obtain a 100 micron thick sheet for laser bonding. The resulting sheet for laser bonding had a tensile elastic modulus of 4.08 MPa.

A 180 degree peel tack force to a stainless steel (SUS304) plate of the resulting sheet for laser bonding was 18.7 N/25 mm on average of the convex point, 16.2 N/25 mm on average of the concave point, and 17.4 N/25 mm on average of the concave and convex points. A 180 degree peel tack force to a polypropylene plate was 11.8 N/25 mm on average of the convex point, 7.9 N/25 mm on average of the concave point, and 9.9 N/25 mm on average of the concave and convex points. To sum up, the resulting sheet for laser bonding has a sufficient tack force to both the metal and resin.

As shown in Table 1, a polyoxymethylene (POM) plate and a polypropylene (PP) plate were used as the first member, while a high tensile strength steel plate (HT) and an aluminum (AL) plate were used as the second member. As shown in Fig. 2, a first member 2 and a second member 4 were laid one upon another while being mutually offset by 30 mm so that the first member 2 faces upward, and the resulting sheet for bonding (numeral 3 in the drawing) was sandwiched between the first member 2 and the second member 4 (superposed portion indicated by the symbol A in Fig. 2), followed by loading of a weight of 3.3 kg for one minute and further aging for about 20 minutes to obtain a laminate. The superposed portion of the resulting laminate was heated by irradiation with laser beams from above (the side of the first member) under the following conditions. As a heat source of laser, a semiconductor laser of a mixture of three wavelengths of 800, 940 and 980 mm was used. As a collimate diameter of laser beams was 46 mm, a focal distance was 100 mm, and a minimum spot diameter was 600 µm. Laser beams were irradiated at the output shown in Table 1 under the conditions of an irradiation distance of 105 mm. Scanning was performed by 15 mm at a rate of 1 mm/sec in a longitudinal direction (lateral direction in Fig. 2) of the first member. The sheet for bonding was melted by repeating scanning of laser beams three times while shifting by 5 mm in the short direction (vertical direction in Fig. 2) of the first member. After completion of irradiation, the sheet for bonding is solidified again by air-cooling, thereby bonding the first member and the second member via the sheet for bonding to obtain a bonded article. The measurement results of the shear strength are summarized in Table 1.

### Example 2

In the same manner as in Example 1, except that 20 parts by weight of a hydrogenated terpene resin ("Clearon K-115", manufactured by YASUHARA CHEMICAL CO., LTD.) was used in place of 20 parts by weight of the terpene resin in Example 1, a 100 micron thick sheet for bonding was obtained. The resulting sheet for bonding had a tensile elastic modulus of 5.97 MPa. A 180 degree peel tack force to a stainless steel (SUS304) plate of the resulting sheet for bonding was 17.5 N/25 mm on average of the convex point, 16.2 N/25 mm on average of the concave point, and 16.9 N/25 mm on average of the concave and convex points. A 180 degree peel tack force to a polypropylene plate was 13.5 N/25 mm on average of the convex point, 7.3 N/25 mm on average of the concave point, and 10.4 N/25 mm on average of the concave and convex points. To sum up, the resulting sheet for bonding has a sufficient tack force to both the metal and resin. Using this sheet for bonding, laser beams were irradiated and a shear strength was measured in the same manner as in Example 1. Only a test of using a polypropylene (PP) plate as the first member and using an aluminum (AL) plate as the second plate was performed. The results are summarized in Table 1.

### Comparative Example 1

In the same manner as in Example 1, except that the terpene resin was not used and that 40 parts by weight of the same modified SEBS as that in Example 1, 0.05 part by weight of the same infrared absorbent as that in Example 1 and 60 parts by weight of toluene were used, a 100 micron thick sheet for bonding was obtained. The resulting sheet for bonding had a tensile elastic modulus of 81.5 MPa. The resulting sheet had no tackiness. Using this sheet for bonding, laser beams were irradiated and shear strength was measured in the same manner as in Example 1. The results are summarized in Table 1.

**Table 1**

| First member/Second member | Laser output (W) | Shear adhesion strength (N) | | |
|---|---|---|---|---|
| | | Example 1 | Example 2 | Comparative Example 1 |
| | | SEBS/Terpene resin | SEBS/Hydrogenated terpene-styrene resin | SEBS |
| | | Tensile elastic modulus 4.08 MPa | Tensile elastic modulus 5.97 MPa | Tensile elastic modulus 81.5 MPa |
| | | 180 degree peel tack force 17.4 N/25 mm | 180 degree peel tack force 16.9 N/25 mm | 180 degree peel tack force 0 N/25 mm |
| POM/AL | 0 | 92 | - | 0 |
| | 170 | 262 | - | - |
| | 200 | 297 | - | 356 |
| | 230 | 415 | - | 185 |
| POM/HT | 0 | 100 | - | 0 |
| | 120 | - | - | 109 |
| | 150 | 444 | - | 195 |
| | 170 | 562 | - | 227 |
| | 200 | 669 | - | 10 |
| | 240 | 342 | - | - |
| PP/AL | 0 | 82 | 16 | 0 |
| | 120 | 359 | 17 | - |
| | 160 | 519 | 246 | 156 |
| | 200 | 441 | 394 | 247 |
| PP/HT | 0 | 85 | - | 0 |
| | 140 | 342 | - | 225 |
| | 160 | 477 | - | 474 |
| | 180 | 513 | - | 337 |

As is apparent from the results shown in Table 1, bonded articles of Example 1 and Example 2 have a fixed shear strength even when laser output is 0 W (example in which irradiation with laser beams is not performed). It is also found that the shear strength of the bonded article obtained by irradiation with laser beams is higher than that of the bonded article using a tackifier-free sheet for bonding of Comparative Example 1.

### Example 3

100 parts by weight of an acryl-based block copolymer "LA2140E" manufactured by KURARAY CO., LTD., 0.2 part by weight of carbon black "PRINTEX G" manufactured by Degussa and 150 parts by weight of toluene were weighed, placed in a container, allowed to stand while sealing for 18 hours and then stirred by a screw until a uniform mixture is obtained. The resulting mixture was applied on a release paper using a coater and then dried to obtain a 100 micron thick sheet for bonding. "LA2140E" is a triblock copolymer of methyl methacrylate-n-butyl acrylate-methyl methacrylate. The resulting sheet for bonding had a tensile elastic modulus of 0.5 MPa. A 180 degree peel tack force to a stainless steel (SUS304) plate of the resulting sheet for bonding was 8.7 N/25 mm on average of the convex point, 5.3 N/25 mm on average of the concave point, and 7.0 N/25 mm on average of the concave and convex points.

A polyoxymethylene (POM) plate was used as both a first member and a second member. As shown in Fig. 2, a first member 2 and a second member 4 were laid one upon another while being mutually offset by 25 mm so that the first member 2 faces upward. The resulting sheet for bonding (25 mm x 25 mm, numeral 3 in the drawing) was sandwiched between the first member 2 and the second member 4 (superposed portion indicated by the symbol A in Fig. 2), followed by loading of a weight of 3.3 kg for one minute and further aging for about 20 minutes to obtain a laminate. The superposed portion of the resulting laminate was heated by irradiation with laser beams from above (the side of the first member) under the following conditions. As a heat source of laser, a semiconductor laser of a mixture of three wavelengths of 800, 940 and 980 mm was used. As a collimate diameter of laser beams was 46 mm, a focal distance was 100 mm, and a minimum spot diameter was 600 µm. Laser beams were irradiated at the output shown in Table 2 under the conditions of an irradiation distance of 105 mm. Scanning was performed only once by 20 mm at a rate of 3 mm/sec in a longitudinal direction (lateral direction in Fig. 2) of the first member, thereby melting the first member. After completion of irradiation, the sheet for bonding is solidified again by air-cooling, thereby bonding the first member and the second member via the sheet for bonding to obtain a bonded article. The measurement results of the shear strength are summarized in Table 2.

### Example 4

In the same manner as in Example 3, except that 70 parts by weight of an acryl-based block copolymer "LA2140E" manufactured by KURARAY CO., LTD., 30 parts by weight of an acryl-based block copolymer "LA1114" manufactured by KURARAY CO., LTD., 0.2 part by weight of carbon black "PRINTEX G" manufactured by Degussa and 150 parts by weight of toluene were used, a 100 micron thick sheet for bonding was obtained. "LA1114" is a diblock copolymer of methyl methacrylate-n-butyl acrylate. The resulting sheet for bonding had a tensile elastic modulus of 0.4 MPa. A 180 degree peel tack force to a stainless steel (SUS304) plate of the resulting sheet for bonding was 9.0 N/25 mm on average of the convex point, 5.6 N/25 mm on average of the concave point, and 7.3 N/25 mm on average of the concave and convex points. Using this sheet for bonding, laser beams were irradiated and shear strength was measured in the same manner as in Example 3. The results are summarized in Table 2.

### Comparative Example 2

In the same manner as in Example 3, except that 100 parts by weight of the same SEBS as that in Example 1, 0.2 part by weight of carbon black "PRINTEX G" manufactured by Degussa and 150 parts by weight of toluene were used, a 100 micron thick sheet for bonding was obtained. The resulting sheet for bonding had a tensile elastic modulus of 82.0 MPa. The resulting sheet had not tackiness. Using this sheet for bonding, laser beams were irradiated and shear strength was measured in the same manner as in Example 3. The results are summarized in Table 2.

**Table 2**

| First member/Second member | Laser output (W) | Shear adhesion strength (N) | | |
|---|---|---|---|---|
| | | Example 3 | Example 4 | Comparative Example 2 |
| | | Triblock copolymer | Triblock copolymer/Diblock copolymer | SEBS |
| | | Tensile elastic modulus 0.5 MPa | Tensile elastic modulus 0.4 MPa | Tensile elastic modulus 82.0 MPa |
| | | 180 degree peel tack force 7.0 N/25 mm | 180 degree peel tack force 7.3 N/25 mm | 180 degree peel tack force 0 N/25 mm |
| POM/POM | 0 | 76 | 120 | 0 |
| | 50 | 180 | 200 | 21 |
| | 100 | 202 | 901 | 47 |
| | 150 | 950 | 960 | 220 |
| | 200 | 1021 | 671 | 231 |
| | 250 | 767 | - | 201 |

As described above, with respect to those in which a resin itself has tackiness, a first member and a second member can be bonded without adding a tackifier and an adhesion force can be increased by irradiation with laser beams. In Example 4 in which a diblock copolymer having excellent flowability at low temperature is blended, a tack force before irradiation with laser beams is larger when compared with Example 3, and a high adhesion amount could be obtained at a smaller laser output.

## Claims

1. An intermediate member for laser bonding to be sandwiched, in order to bond a first member and a second member using a laser welding method, between the first member made of a material capable of transmitting laser beams and the second member made of a material which is the same as or different from that of the first member before irradiation with laser beams, wherein the intermediate member for laser bonding has tackiness.

2. The intermediate member for laser bonding according to claim 1, which is made of a resin composition comprising a base polymer and a tackifier.

3. The intermediate member for laser bonding according to claim 2, wherein the base polymer is an elastomer.

4. The intermediate member for laser bonding according to claim 2 or 3, wherein the base polymer is modified with a monomer having a polar functional group.

5. The intermediate member for laser bonding according to any one of claims 2 to 4, which contains the tackifier in the amount of 1 to 500 parts by weight based on 100 parts by weight of the base polymer.

6. The intermediate member for laser bonding according to any one of claims 1 to 5, wherein the base polymer is an acrylic-based block copolymer.

7. The intermediate member for laser bonding according to any one of claims 1 to 6, which contains a laser beam absorbing agent.

8. The intermediate member for laser bonding according to any one of claims 1 to 7, which has a thickness of 10 to 5,000 µm.

9. The intermediate member for laser bonding according to any one of claims 1 to 8, which has a tensile elastic modulus at 23°C of 0.01 to 500 MPa.

10. The intermediate member for laser bonding according to any one of claims 1 to 9, wherein a 180 degree peel tack force to a SUS 304 plate measured based on JIS Z0237 10.4 is 0.1 N/25 mm or more.

11. A method for bonding a first member made of a material capable of transmitting laser beams and a second member made of a material which is the same as or different from that of the first member, the method comprising sandwiching an intermediate member having tackiness for laser bonding between the first member and the second member, and irradiating with laser beams from the side of the first member, thereby fusing the intermediate member for laser bonding and bonding the first member and the second member.

12. The method for bonding according to claim 11, wherein the second member is made of a material which is different from that of the first member.

13. The method for bonding according to claim 11 or 12, wherein only a portion of the intermediate member for laser bonding is melted by irradiation with laser beams.

14. A bonded article comprising a first member made of a material capable of transmitting laser beams, a second member made of a material which is the same as or different from that of the first member, and an intermediate member for laser bonding, which is sandwiched between the first member and the second member and is also fused to each of the first member and the second member as a result of irradiation with laser beams, wherein the intermediate member for laser bonding has tackiness.
